# EUROPEAN PATENT APPLICATION

(11) **EP 4 821 761 A1**
(43) Date of publication of application: **14.10.2026**
(21) Application number: 24910602.2
(22) Date of filing: 04.12.2024
(51) Int. Cl.: B60Q 1/04, B60Q 1/076, F21S 41/00

(54) **VEHICLE LAMP SYSTEM, VEHICLE LAMP, AND VEHICLE**

(30) Priority: 25.12.2023 CN 202311808682
(71) Applicant: Yinwang Intelligent Technologies Co., Ltd., Shenzhen, Guangdong 518110 (CN)
(72) Inventor: ZHU, Nan, Shenzhen, Guangdong 518129 (CN); SHI, Hao, Shenzhen, Guangdong 518129 (CN); ZHAO, Zhuang, Shenzhen, Guangdong 518129 (CN)
(74) Representative: Maiwald GmbH
(86) International application number: PCT/CN2024/136878
(87) International publication number: WO 2025/139670

(57) **Abstract**

A vehicle lamp system (100), a vehicle lamp (110), and a vehicle are provided. The vehicle lamp system (100) includes the vehicle lamp (110) and a vehicle lamp controller (120). The vehicle lamp (110) includes a first light emitting module (1101, 11011, 11012) and a second light emitting module (1102, 11021, 11022). The first light emitting module (1101, 11011, 11012) and the second light emitting module (1102, 11021, 11022) are pixelated light emitting modules, and pixels of the first light emitting module (1101, 11011, 11012) are higher than pixels of the second light emitting module (1102, 11021, 11022). The vehicle lamp controller (120) is configured to control the first light emitting module (1101, 11011, 11012) and the second light emitting module (1102, 11021, 11022) to emit light. A pattern formed by the second light emitting module (1102, 11021, 11022) through light emitting includes a first area and a second area. The first area is an area covered by illumination of the second light emitting module (1102, 11021, 11022), and the second area is an area not covered by the illumination of the second light emitting module (1102, 11021, 11022). The second area includes a target object, an area between the target object in the second area and the vehicle lamp belongs to a third area, and illumination of the first light emitting module (1101, 11011, 11012) covers the third area. In this solution, a high beam shielding dark area can be reduced, anti-dazzling is implemented, and a road surface in front of an ego vehicle is illuminated, to greatly improve driving safety.

## Description

This application claims priority to Chinese Patent Application No. 202311808682.4, filed with the China National Intellectual Property Administration on December 25, 2023 and entitled "VEHICLE LAMP SYSTEM, VEHICLE LAMP, AND VEHICLE", which is incorporated herein by reference in its entirety.

### TECHNICAL FIELD

This application relates to the field of vehicle technologies, and in particular, to a vehicle lamp system, a vehicle lamp, and a vehicle.

### BACKGROUND

During driving at night, a high beam is usually turned on, to improve illumination effect. However, the high beam may dazzle a driver of an opposite-side vehicle or a driver of a same-side vehicle, potentially leading to an accident, and posing a safety risk. To meet objectives of both high beam illumination and anti-dazzling, an adaptive driving beam (adaptive driving beam, ADB) system emerges.

The ADB system is an intelligent anti-dazzling high beam system. A camera may be used to sense another vehicle that exists in front of a vehicle. In addition, through real-time computation and control, corresponding light emitting diode (light emitting diode, LED) dies in a high beam assembly are dimmed or turned off. In this way, a dark area is formed in a road surface area in which the another vehicle is located, to avoid a dazzling impact on the front vehicle. However, currently, a dark area formed by the ADB system is large, affecting illumination on a road surface in front of the vehicle and potentially causing a safety accident.

### SUMMARY

This application provides a vehicle lamp system, a vehicle lamp, and a vehicle, to reduce a high beam shielding dark area, implement anti-dazzling, and illuminate a road surface in front of an ego vehicle, so as to greatly improve driving safety.

According to a first aspect, this application provides a vehicle lamp system. The vehicle lamp system includes a vehicle lamp and a vehicle lamp controller.

The vehicle lamp includes a first light emitting module and a second light emitting module, the first light emitting module and the second light emitting module are pixelated light emitting modules, and pixels of the first light emitting module are higher than pixels of the second light emitting module.

The vehicle lamp controller is configured to control the first light emitting module and the second light emitting module to emit light.

A pattern formed by the second light emitting module through light emitting includes a first area and a second area, the first area is an area covered by illumination of the second light emitting module, and the second area is an area not covered by the illumination of the second light emitting module.

The second area includes a target object, an area between the target object in the second area and the vehicle lamp belongs to a third area, and illumination of the first light emitting module covers the third area.

Optionally, the first light emitting module is a light emitting module implemented based on digital light processing DLP, and the second light emitting module is a light emitting module implemented based on a plurality of light emitting diodes LEDs.

In the foregoing solution, through cooperation between a high-pixel light emitting module (the first light emitting module) and a low-pixel light emitting module (the second light emitting module), a high beam shielding dark area formed by the low-pixel light emitting module is reduced, and high-precision high-beam shielding in front of an ego vehicle (for example, in a main visual area of a driver) is implemented. In this way, a target object in a same direction or in an opposite direction is not dazzled in front of the vehicle, and a road surface in front of the ego vehicle can be illuminated, to greatly improve driving safety.

In a possible implementation, a maximum illumination range of the second light emitting module is greater than a maximum illumination range of the first light emitting module.

In the foregoing solution, an illumination coverage range of the high-pixel first light emitting module is small. Therefore, in this solution, the illumination coverage range may be further expanded by using the low-pixel second light emitting module. In this way, the illumination range is expanded, and a high beam shielding coverage angle is further expanded, so that more scenarios are applied, and more objects are shielded.

In a possible implementation, that the vehicle lamp controller is configured to control the first light emitting module and the second light emitting module to emit light includes:
the vehicle lamp controller is configured to: receive location information of the target object, and determine first pixel coordinates and second pixel coordinates based on the location information, where the first pixel coordinates include coordinates of a pixel unit used for light emitting in the first light emitting module, and the second pixel coordinates include coordinates of a pixel unit used for light emitting in the second light emitting module; and
the vehicle lamp controller is further configured to: control the first light emitting module to emit light based on the first pixel coordinates, and control the second light emitting module to emit light based on the second pixel coordinates.

In the foregoing solution, a location of the high beam shielding dark area can be accurately located based on the location information of the target object. Therefore, an illumination coverage area of the light emitting module can be accurately controlled, to implement precise high beam shielding.

In a possible implementation, that the vehicle lamp controller is configured to: receive the location information of the target object, and determine the first pixel coordinates and the second pixel coordinates based on the location information includes:
the vehicle lamp controller is configured to: receive the location information and type information of the target object, and determine the first pixel coordinates and the second pixel coordinates based on the location information when the type information indicates that the target object belongs to a preset high beam shielding object type.

In the foregoing solution, the high beam shielding object type is preset, and high beam shielding is performed only on an object that meets the preset type. In this way, an unnecessary shielding operation can be reduced, to reduce interference to road surface illumination while computing resources are saved.

In a possible implementation, the vehicle lamp controller includes a first controller and a second controller, the first controller is configured to control the first light emitting module to emit light, and the second controller is configured to control the second light emitting module to emit light.

In the foregoing solution, the vehicle lamp controller is flexibly disposed, and a limitation on hardware setting is reduced.

In a possible implementation, the vehicle lamp system further includes a sensing apparatus, and the sensing apparatus is configured to sense a location and/or a type of the target object.

In the foregoing solution, location information and/or type information of the target object may be accurately obtained through the sensing apparatus, to implement accurate high beam shielding.

In a possible implementation, the third area further includes areas on two sides of the target object in the second area.

In the foregoing solution, an area covered by the illumination of the first light emitting module further includes the areas on the two sides of the target object. In this way, effective road illumination can be further implemented, and driving safety can be improved.

According to a second aspect, this application provides a vehicle lamp. The vehicle lamp includes a first light emitting module and a second light emitting module.

The first light emitting module and the second light emitting module are pixelated light emitting modules, and pixels of the first light emitting module are higher than pixels of the second light emitting module.

The first light emitting module and the second light emitting module are configured to emit light to form patterns.

A pattern formed by the second light emitting module through light emitting includes a first area and a second area, the first area is an area covered by illumination of the second light emitting module, and the second area is an area not covered by the illumination of the second light emitting module.

The second area includes a target object, a third area is included between the target object in the second area and the vehicle lamp, and illumination of the first light emitting module covers the third area.

In a possible implementation, an illumination range of the second light emitting module is greater than an illumination range of the first light emitting module.

According to a third aspect, this application provides a vehicle. The vehicle includes the vehicle lamp system according to any implementation of the first aspect, or the vehicle includes the vehicle lamp according to any implementation of the second aspect.

For beneficial effects of the second aspect and the third aspect, refer to descriptions of the first aspect. Details are not described herein again.

### BRIEF DESCRIPTION OF DRAWINGS

FIG. 1 to FIG. 11 each are a diagram of a structure of a vehicle lamp system according to an embodiment of this application;
FIG. 12 to FIG. 16 each are a diagram of high beam shielding effect according to an embodiment of this application; and
FIG. 17 is a schematic flowchart of a control method according to an embodiment of this application.

### DESCRIPTION OF EMBODIMENTS

In embodiments of this application, ''a plurality of'' means two or more than two. In embodiments of this application, "and/or" is used to describe an association relationship between associated objects, and indicates three relationships that may exist independently. For example, A and/or B may indicate the following: Only A exists, only B exists, or both A and B exist. An expression, for example, "at least one (or at least one piece) of a1, a2, ..., and an", used in embodiments of this application includes the following cases: Any one of a1, a2, ..., and an exists independently, or any combination of any plurality of a1, a2, ..., and an exists. Each case may exist independently. For example, an expression of "at least one of a, b, and c" includes the following cases: Only a exists, only b exists, only c exists, a combination of a and b exists, a combination of a and c exists, a combination of b and c exists, or a combination of a, b, and c exists.

The terms such as "first" and "second" in this application are used to distinguish between same or similar items with basically same roles and functions. It should be understood that, there is no logical or timing dependency between "first", "second", and "nth", and neither a quantity nor an execution sequence is limited. It should also be understood that although the following descriptions use terms such as "first" and "second" to describe various elements, these elements should not be limited by the terms. These terms are simply used to distinguish one element from another.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

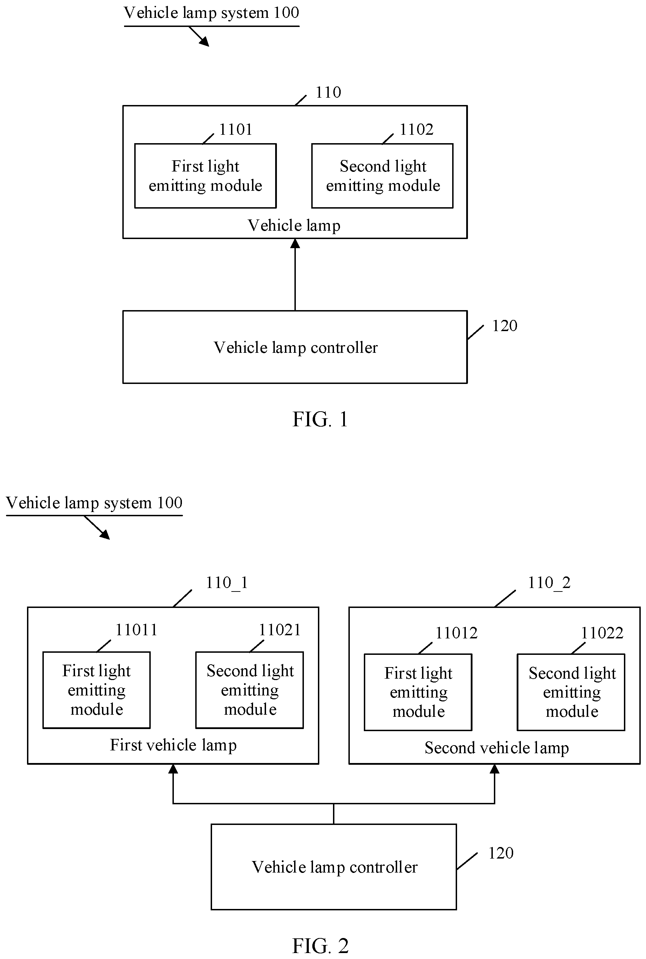

Embodiments of this application provide a vehicle lamp system, to reduce a high beam shielding dark area, implement anti-dazzling, and illuminate a road surface in front of an ego vehicle, so as to improve driving safety. The following provides examples for description with reference to FIG. 1 to FIG. 11.

In a possible implementation, for example, for the vehicle lamp system provided in embodiments of this application, refer to FIG. 1. A vehicle lamp system 100 shown in FIG. 1 may include a vehicle lamp 110 and a vehicle lamp controller 120. The vehicle lamp 110 may include a first light emitting module 1101 and a second light emitting module 1102.

For example, the vehicle lamp 110 may be a high beam of a vehicle.

For example, the first light emitting module 1101 and the second light emitting module 1102 are pixelated light emitting modules. In addition, pixels of the first light emitting module 1101 are higher than pixels of the second light emitting module 1102.

The pixelated light emitting module means that the light emitting module may include a plurality of units used for emitting light, and the units used for emitting light may be referred to as pixel units for short. Each pixel unit may be separately controlled to be turned on or off. Turning on the pixel unit indicates that the pixel unit is controlled to emit light. Turning off the pixel unit indicates that the pixel unit is controlled not to emit light. Each of the plurality of pixel units is controlled to be turned on or off, light emitted by the light emitting module may form various patterns and shapes.

That the pixels of the first light emitting module 1101 are higher than the pixels of the second light emitting module 1102 indicates that a pixel density of the first light emitting module 1101 is greater than a pixel density of the second light emitting module 1102. For example, the first light emitting module 1101 may implement illumination control in a finer-granularity area.

For example, the first light emitting module 1101 may be a light emitting module based on digital light processing (digital light processing, DLP). The light emitting module may include a digital micromirror device (digital micromirror device, DMD). For example, a matrix including a large quantity of small lens elements is disposed on the DMD, and each small lens element indicates one pixel unit. An angle of movement of the small lens element is controlled, so that light from a light source (a laser, an LED lamp, or the like) may be emitted to the outside (for example, emitted from the vehicle lamp). This indicates that the pixel unit is turned on. Alternatively, an angle of movement of the small lens element is controlled, so that light can be absorbed and may not be emitted to the outside. This indicates that the pixel unit is turned off. For example, millions or even more pixel units may be disposed on the DMD, so that megapixel-level light emitting control can be implemented.

Alternatively, for example, the first light emitting module 1101 may be a light emitting module based on a reflective liquid crystal projection technology. The light emitting module may include a liquid crystal on silicon (liquid crystal on silicon, LCoS) chip. Millions of pixel electrodes (namely, pixel units) may be integrated on the LCoS chip. These pixel units are controlled, and similarly, megapixel-level light emitting control may be implemented.

It may be understood that the foregoing descriptions of the first light emitting module 1101 are merely an example, and this does not constitute a limitation on embodiments of this application. In a specific implementation, the first light emitting module 1101 may alternatively be another light emitting module that can implement megapixel-level light emitting control, or may be another light emitting module whose pixels are higher than the pixels of the second light emitting module 1102. This is not limited in embodiments of this application.

For example, the second light emitting module 1102 may be a light emitting module including a plurality of LEDs. Each LED indicates one pixel unit. Brightening (turning on) or dimming (turning off) of each of the plurality of LEDs is controlled, so that light emitted by the second light emitting module 1102 may form various patterns and shapes. For example, the plurality of LEDs may be, for example, any quantity ranging from 20 to 90. For example, the second light emitting module 1102 may include an LED matrix including 84 LEDs. A quantity of LEDs is not limited in embodiments of this application.

In a possible implementation, a maximum illumination range of the second light emitting module 1102 is greater than a maximum illumination range of the first light emitting module 1101. For example, it is assumed that the maximum illumination range of the first light emitting module 1101 is within a range covered by a first field of view (field of view, FOV) in front of a vehicle head, and the maximum illumination range of the second light emitting module 1102 is within a range covered by a second field of view in front of the vehicle head. In this case, the second field of view is greater than the first field of view. For example, an angle of the first field of view is between 10° and 14°, and an angle of the second field of view is between 30° and 40°. For example, the first field of view is 14°, and the maximum illumination range of the first light emitting module 1101 is within a range spanning 7° to both the left and the right in front of the vehicle head. For example, the second field of view is 40°, and the maximum illumination range of the second light emitting module 1102 is within a range spanning 20° to both the left and the right in front of the vehicle head. It may be understood that descriptions of the first field of view and the second field of view herein are merely an example, and this does not constitute a limitation on embodiments of this application. In a specific implementation, the first field of view and the second field of view may alternatively be other values. This is not limited in embodiments of this application.

In a possible implementation, the maximum illumination range of the second light emitting module 1102 and the maximum illumination range of the first light emitting module 1101 may cover an area tens of meters to hundreds of meters in front of the vehicle head. A specific coverage length is designed based on an actual application requirement. This is not limited in embodiments of this application.

The vehicle lamp controller 120 may be configured to control the first light emitting module 1101 and the second light emitting module 1102 to emit light, to form corresponding patterns. For specific control logic, refer to the following descriptions. Details are not described herein.

For example, the vehicle lamp controller 120 may be integrated into a domain controller of the vehicle. For example, the vehicle lamp controller may be integrated into a controller like a vehicle control unit (vehicle control unit, VCU), a hybrid control unit (hybrid control unit, HCU), a vehicle domain controller (vehicle domain controller, VDC), or an intelligent driving controller. Alternatively, the vehicle lamp controller 120 may be, for example, a controller that is independently disposed and that is independent of these domain controllers. This is not limited in embodiments of this application.

In a possible implementation, for example, refer to FIG. 2. The vehicle lamp 110 may include a first vehicle lamp 110_1 and a second vehicle lamp 110_2. For example, one of the first vehicle lamp 110_1 and the second vehicle lamp 110_2 may be a left high beam of a vehicle, and the other may be a right high beam of the vehicle.

For example, the first vehicle lamp 110_1 may include a first light emitting module 11011 and a second light emitting module 11021. The second vehicle lamp 110_2 may include a first light emitting module 11012 and a second light emitting module 11022. For descriptions of the first light emitting module 11011 and the first light emitting module 11012, refer to descriptions of the first light emitting module 1101. Details are not described herein again. For descriptions of the second light emitting module 11021 and the second light emitting module 11022, refer to descriptions of the second light emitting module 1102. Details are not described herein again.

For example, the vehicle lamp controller 120 shown in FIG. 2 may be configured to control the first light emitting module 11011, the second light emitting module 11021, the first light emitting module 11012, and the second light emitting module 11022 to emit light, to form corresponding patterns.

For example, in another possible implementation, the first vehicle lamp 110_1 may include only the first light emitting module 11011. The second vehicle lamp 110_2 may include only the first light emitting module 11012. Then, the vehicle lamp 110 may further include a third vehicle lamp. The third vehicle lamp includes the second light emitting module 1102.

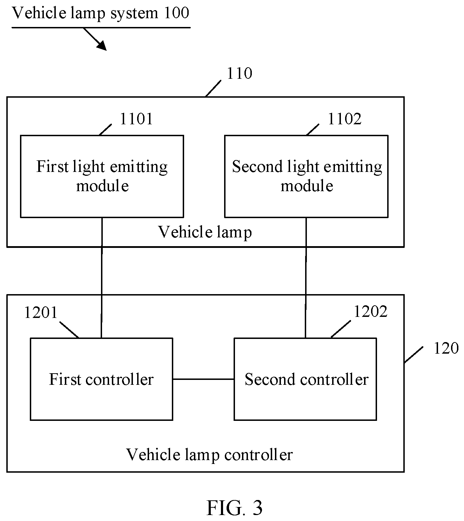

In a possible implementation, for example, refer to FIG. 3. The vehicle lamp controller 120 may include a first controller 1201 and a second controller 1202. For example, the first controller 1201 and the second controller 1202 may communicate with each other. The first controller 1201 may be configured to control the first light emitting module 1101 to emit light. The second controller 1202 may be configured to control the second light emitting module 1102 to emit light.

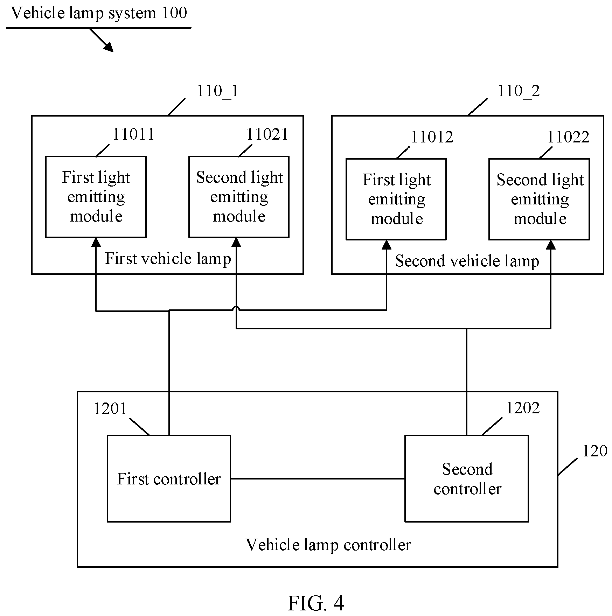

In a possible implementation, for example, refer to FIG. 4. In the vehicle lamp system 100 shown in FIG. 4, the first controller 1201 may be configured to control a high-pixel light emitting module to emit light, for example, configured to control the first light emitting module 11011 and the first light emitting module 11012 to emit light. The second controller 1202 may be configured to control a low-pixel light emitting module to emit light, for example, configured to control the second light emitting module 11021 and the second light emitting module 11022 to emit light.

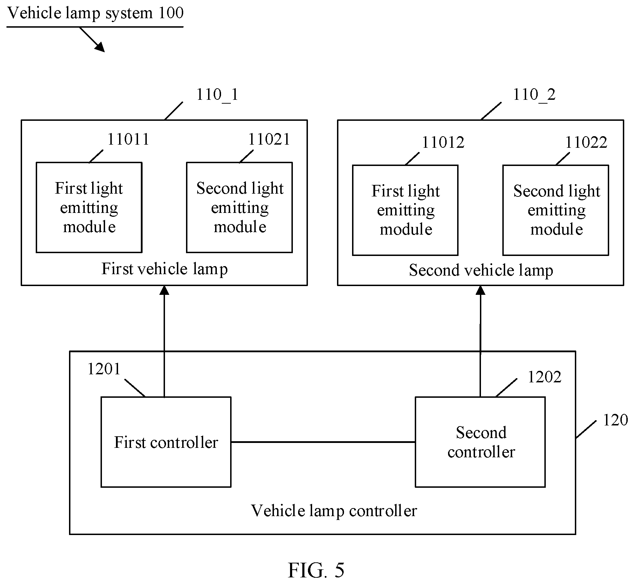

In a possible implementation, for example, refer to FIG. 5. In the vehicle lamp system 100 shown in FIG. 5, the first controller 1201 may be configured to control the light emitting module of the first vehicle lamp 110_1 to emit light, for example, configured to control the first light emitting module 11011 and the second light emitting module 11021 to emit light. The second controller 1202 may be configured to control the light emitting module of the second vehicle lamp 110_2 to emit light, for example, configured to control the first light emitting module 11012 and the second light emitting module 11022 to emit light.

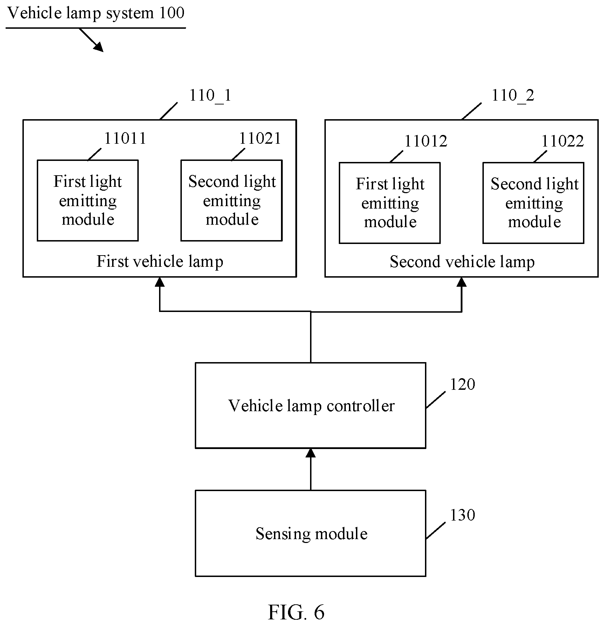

In a possible implementation, for example, refer to FIG. 6. The vehicle lamp system 100 may further include a sensing module 130. For example, the sensing module 130 may be configured to sense a location and/or a type of an object around the vehicle. Then, the sensed location and/or the sensed type of the object are/is sent to the vehicle lamp controller 120, so that the vehicle lamp controller 120 may control, based on the location and/or the type of the object, the light emitting module in the vehicle lamp to emit light.

For example, the type of the object may include various types of vehicles, a pedestrian, an animal, or the like. This is not limited in embodiments of this application.

For example, the sensing module 130 may include a camera, a radar (for example, a lidar, a microwave radar, or a millimeter-wave radar), or a combination of a camera and a radar.

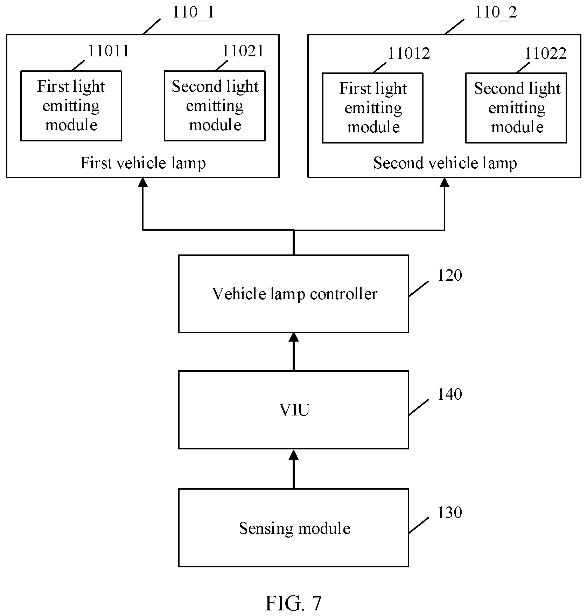

In a possible implementation, the sensing module 130 may be, for example, a sensing module that serves an advanced driving assistance system (advanced driving assistance system, ADAS) in the vehicle. After the sensing module obtains the location and/or the type of the object, an ADAS controller may send the location and/or the type of the object to the vehicle lamp controller 120. For example, the ADAS controller may first send location and/or type information to a vehicle integration unit (vehicle integration unit, VIU) of the vehicle, and then the VIU forwards the location and/or type information to the vehicle lamp controller 120. For example, as shown in FIG. 7, a VIU 140 herein is equivalent to a gateway of the vehicle, and is configured to forward various information inside the vehicle. For example, the VIU may also be referred to as a vehicle intranet unit (vehicle intranet unit). It may be understood that these names are merely examples, and do not constitute a limitation on embodiments of this application.

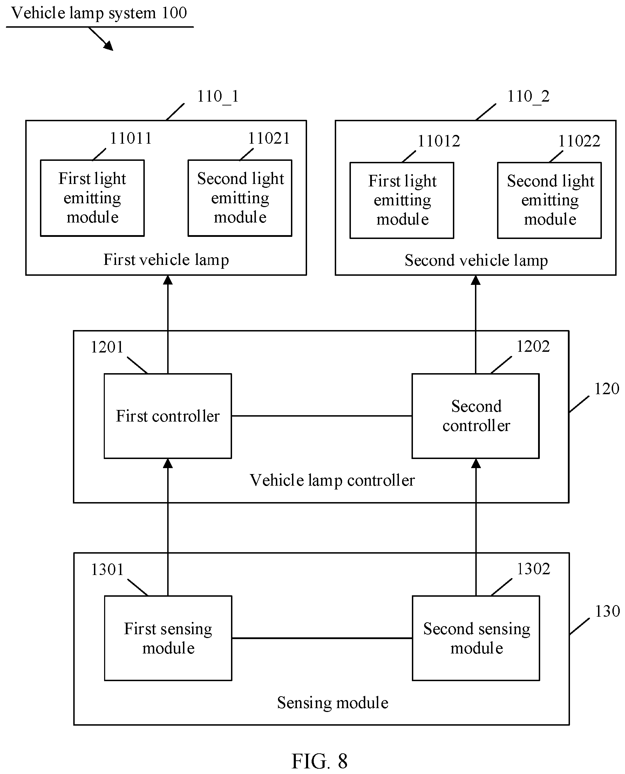

In a possible implementation, the sensing module 130 may be, for example, a sensing module disposed inside the vehicle lamp. For example, with reference to the vehicle lamp system 100 shown in FIG. 5, a sensing module may be disposed in each of the first vehicle lamp 110_1 and the second vehicle lamp 110_2. For example, refer to FIG. 8. The sensing module 130 may include a first sensing module 1301 and a second sensing module 1302. The first sensing module 1301 may be disposed inside the first vehicle lamp 110_1. The second sensing module 1302 may be disposed inside the second vehicle lamp 110_2. The first controller 1201 is configured to control the light emitting module of the first vehicle lamp 110_1 to emit light. Therefore, after obtaining the location and/or type information of the object, the first sensing module 1301 may send the location and/or type information to the first controller 1201. In this way, the first controller 1201 may control, based on the location and/or the type of the object, light emitting of the light emitting module inside the first vehicle lamp 110_1.

Similarly, the second controller 1202 is configured to control the light emitting module of the second vehicle lamp 110_2 to emit light. Therefore, after obtaining the location and/or type information of the object, the second sensing module 1302 may send the location and/or type information to the second controller 1202. In this way, the second controller 1202 may control, based on the location and/or the type of the object, light emitting of the light emitting module inside the second vehicle lamp 110_2.

For example, in the vehicle lamp system 100 shown in FIG. 8, if both the first vehicle lamp 110_1 and the second vehicle lamp 110_2 emit light outward, to ensure that light patterns emitted by the two vehicle lamps are consistent, the first controller 1201 and the second controller 1202 may perform synchronous processing on the received location and/or type information of the object. For example, the location and/or type information of the object that is sent by the sensing module to the controller includes a timestamp. The first controller 1201 and the second controller 1202 may perform synchronous alignment based on the timestamp of the received location and/or type information. For example, the first controller 1201 and the second controller 1202 may perform interactive communication and negotiation to determine the used timestamp of the location and/or type information. Then, the first controller 1201 and the second controller 1202 each control light emitting of a corresponding light emitting module based on the location and/or type information corresponding to the determined timestamp. It may be understood that the foregoing descriptions of information synchronization are merely an example. Any synchronous processing method may be used in embodiments of this application. This is not limited.

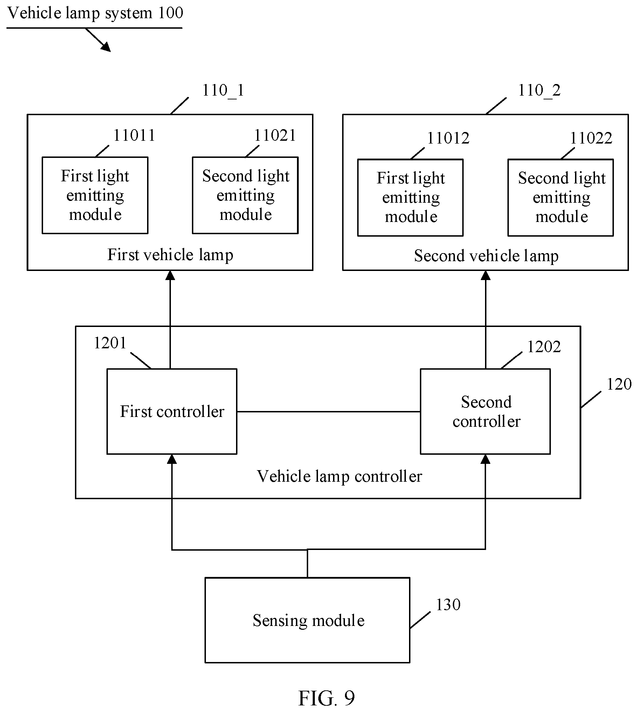

Alternatively, for example, the sensing module 130 may be disposed inside one of the first vehicle lamp 110_1 and the second vehicle lamp 110_2. For example, refer to FIG. 9. FIG. 9 is still described by using the vehicle lamp system 100 shown in FIG. 5 as an example. After obtaining the location and/or type information of the object, the sensing module 130 may send the location and/or type information to the first controller 1201 and the second controller 1202. In this way, the first controller 1201 can control, based on the location and/or the type of the object, light emitting of the light emitting module inside the first vehicle lamp 110_1, and the second controller 1202 can control, based on the location and/or the type of the object, light emitting of the light emitting module inside the second vehicle lamp 110_2. For example, as described above, to ensure that light patterns emitted by the two vehicle lamps are consistent, the first controller 1201 and the second controller 1202 may perform synchronous processing on the received location and/or type information of the object. For details, refer to the foregoing example descriptions. Details are not described herein again.

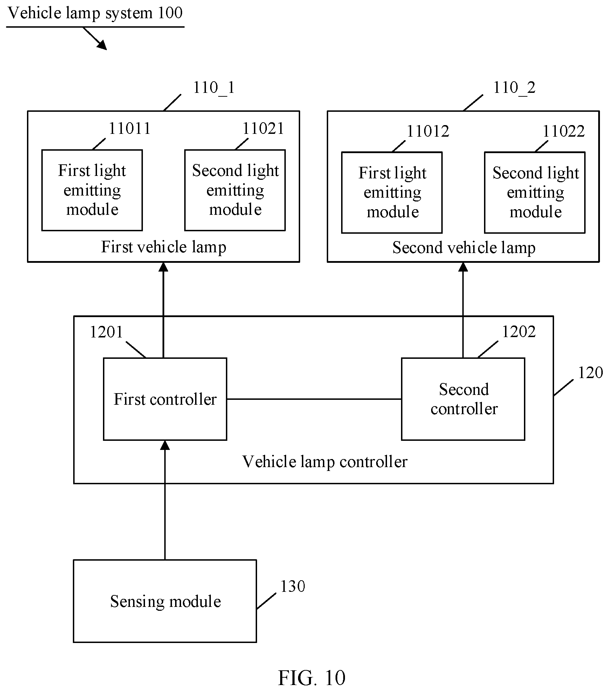

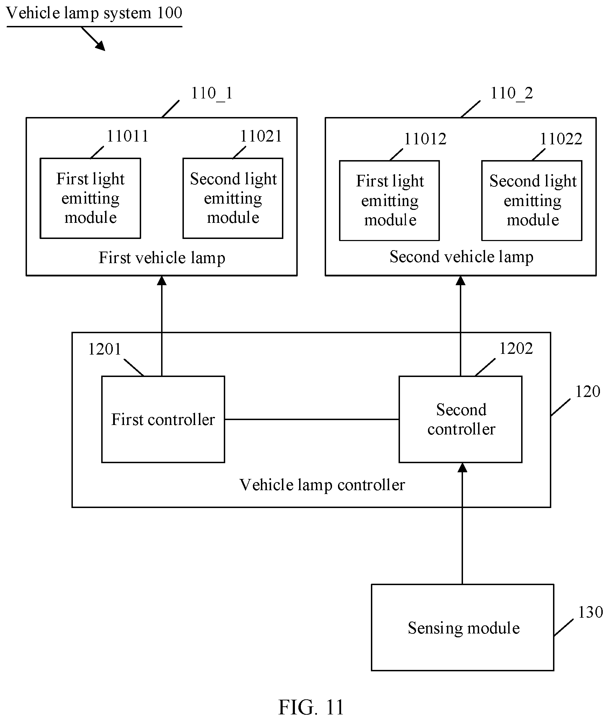

Alternatively, for example, in the foregoing implementation solution of disposing the sensing module 130 inside one of the first vehicle lamp 110_1 and the second vehicle lamp 110_2, after obtaining the location and/or the type information of the object, the sensing module 130 may send the location and/or the type information to one of the first controller 1201 and the second controller 1202. For example, if the sensing module 130 is disposed inside the first vehicle lamp 110_1, the sensing module 130 may send the obtained location and/or type information of the object to the first controller 1201. For example, refer to FIG. 10. Alternatively, for example, if the sensing module 130 is disposed inside the second vehicle lamp 110_2, the sensing module 130 may send the obtained location and/or type information of the object to the second controller 1202. For example, refer to FIG. 11. For example, in a possible implementation, FIG. 10 is used as an example. After obtaining the location and/or the type information of the object, the first controller 1201 may send the location and/or the type information to the second controller 1202. Optionally, in this implementation, the second controller 1202 controls, based on the location and/or the type information received from the first controller 1201, the light emitting module inside the second vehicle lamp 110_2 to emit light. The first controller 1201 also controls, based on the location and/or the type information sent to the second controller 1202, the light emitting module inside the second vehicle lamp 110_2 to emit light. Therefore, no additional synchronous processing is required. A case in FIG. 11 is similar, and details are not described again.

It may be understood that although FIG. 8 to FIG. 11 are described by using the vehicle lamp system 100 shown in FIG. 5 as an example, similarly, the foregoing manner of disposing the sensing module 130 may be applied to the vehicle lamp system 100 shown in FIG. 3 or FIG. 4. Details are not described herein again.

In a possible implementation, the vehicle lamp system 100 provided in embodiments of this application belongs to an ADB system.

It may be understood that the vehicle lamp system 100 shown in FIG. 1 to FIG. 11 is merely an example, and does not constitute a limitation on embodiments of this application.

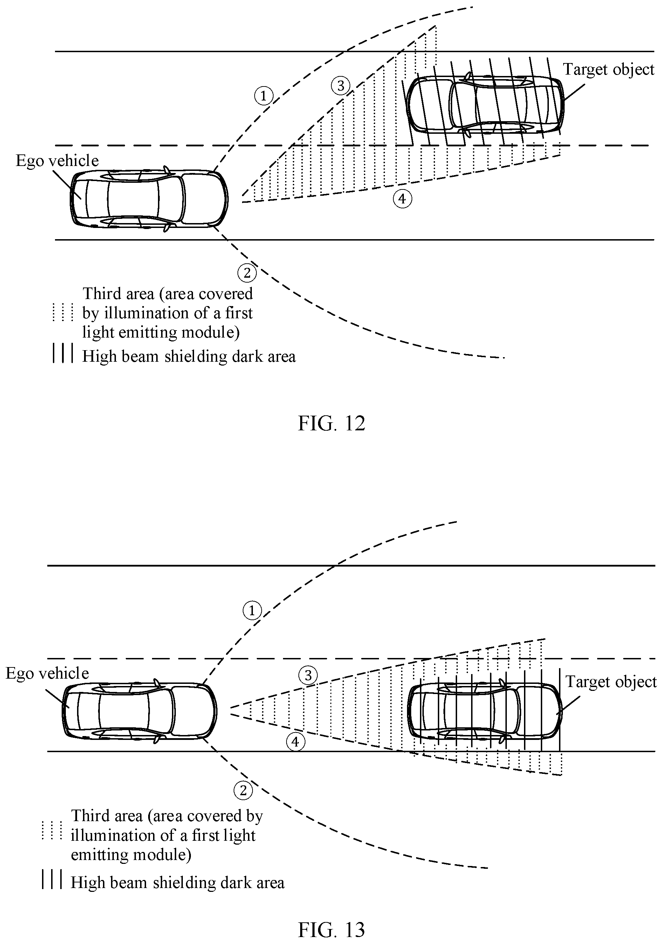

For example, based on the vehicle lamp system 100 described above, through cooperation between the high-pixel light emitting module and the low-pixel light emitting module, a high beam shielding dark area formed by the low-pixel light emitting module is reduced, and high-precision high-beam shielding in front of an ego vehicle (a main visual area of a driver) is implemented. In this way, the target object in a same direction or in an opposite direction is not dazzled in front of the vehicle, and a road surface in front of the ego vehicle can be illuminated. For example, the target object may include, for example, various types of vehicles (including small, medium, and large passenger vehicles, trucks, sanitation vehicles, trailers, bicycles, motorcycles, tricycles, and the like), a pedestrian, or an animal. This is not limited in embodiments of this application. For ease of understanding, the following provides examples for descriptions with reference to FIG. 12 to FIG. 16.

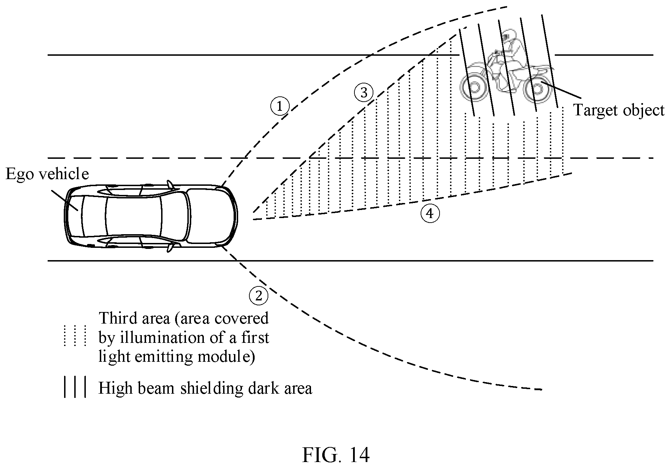

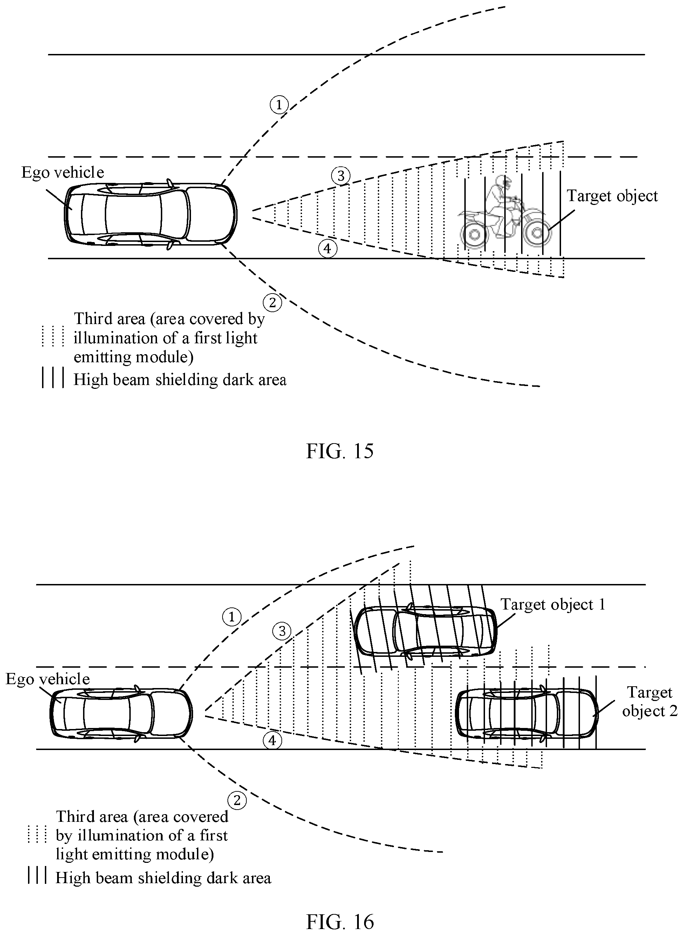

For example, FIG. 12 to FIG. 16 each are an effect diagram of high beam control implemented by using an implementation solution of this application. As shown in FIG. 12 and FIG. 13, an example in which the target object is a small passenger vehicle is used. As shown in FIG. 14 and FIG. 15, an example in which the target object is a motorcycle is used. The target object and the ego vehicle (that is, the vehicle including the vehicle lamp system 100) shown in FIG. 12 and FIG. 14 travel toward each other. The target object and the ego vehicle shown in FIG. 13 and FIG. 15 travel in a same direction. For example, two target objects (a target object 1 and a target object 2) are shown in FIG. 16. The target object 1 and the ego vehicle travel toward each other, and the target object 2 and the ego vehicle travel in a same direction.

In FIG. 12 to FIG. 16, a pattern formed by a second light emitting module of the ego vehicle through light emitting includes a first area and a second area. The second light emitting module may be, for example, at least one of the second light emitting module 11021 and the second light emitting module 11022. For example, the first area is an area, other than the second area, in an area that is in front of an ego vehicle head and that is surrounded by a dashed line ① and a dashed line ② in FIG. 12 to FIG. 16. For example, the second area is an area that is in front of the ego vehicle head and that is surrounded by a dashed line ③ and a dashed line ④ in FIG. 12 to FIG. 16. The first area is an area covered by illumination of the second light emitting module. The second area is an area not covered by the illumination of the second light emitting module. It may be understood that the first area and the second area are within a maximum illumination range of the second light emitting module.

In addition, it may be further learned that the target object is located in the second area. An area between the target object in the second area and a vehicle lamp of the ego vehicle belongs to a third area. Illumination of the first light emitting module of the ego vehicle covers the third area. The first light emitting module may be, for example, at least one of the first light emitting module 11011 and the first light emitting module 11012. Optionally, the third area may further include areas on two sides of the target object in the second area. In other words, the illumination of the first light emitting module may cover the areas on the two sides of the target object in the second area. However, because both the illumination of the first light emitting module and the illumination of the second light emitting module do not cover the target object, a high beam shielding dark area is formed at a location of the target object. For example, the high beam shielding dark area may be within, for example, an area in which the target object is located and defined by a vehicle width of the target object plus a first length. The first length may be, for example, between 1 meter and 2 meters. In this way, high-precision high-beam shielding can be implemented, and dazzling caused by a high beam can be effectively prevented. In addition, because the illumination of the first light emitting module covers the third area, the road surface in front of the ego vehicle is effectively illuminated. In addition, the illumination of the second light emitting module covers a range, so that good ambient environment illumination is provided for the vehicle, to greatly improve driving safety.

It can be understood that effect of high beam control shown in FIG. 12 to FIG. 16 is merely an example, and does not constitute a limitation on embodiments of this application. In addition, the foregoing mainly uses one or two target objects as an example. In a specific implementation, the solution of this application is further applicable to a scenario in which high beam shielding is performed on more target objects. Details are not described herein.

In a specific implementation, the vehicle lamp controller 120 controls, based on the location and/or the type of the target object, the light emitting module in the vehicle lamp to emit light, so as to implement the effect of high beam control described above. The following describes an implementation process of control by using an example.

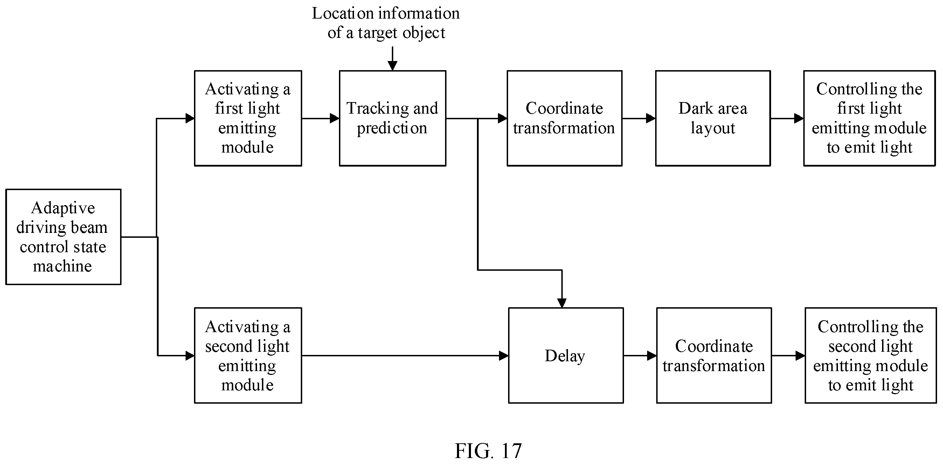

In a possible implementation, for example, refer to FIG. 17. An example of a diagram of a possible high beam control procedure is shown. For example, steps of the high beam control procedure shown in FIG. 17 may be performed by the vehicle lamp controller 120.

In FIG. 17, an adaptive driving beam control state machine may be configured to determine whether to activate a light emitting module, for example, configured to determine whether to turn on a high beam of an ego vehicle. For example, the adaptive driving beam control state machine may perform determining based on a traveling speed of the ego vehicle, brightness of an environment, and/or the like. For example, if the traveling speed reaches a preset speed threshold and/or the brightness of the environment is less than a preset brightness threshold, the adaptive driving beam control state machine may send an activation signal to activate the first light emitting module and the second light emitting module.

After the first light emitting module and the second light emitting module are activated, the vehicle lamp controller may receive location information of the target object. For example, the vehicle lamp controller may periodically receive the location information of the target object, to track and predict the target object. After location information of the target object is predicted, coordinate transformation may be performed based on the predicted location information. For example, the predicted location information may be indicated by using a preset coordinate system. The preset coordinate system may be, for example, a coordinate system of the vehicle or a world coordinate system, and the preset coordinate system has preset correspondences with both a pixel coordinate system of the first light emitting module and a pixel coordinate system of the second light emitting module. First pixel coordinates and second pixel coordinates may be obtained through coordinate transformation. The first pixel coordinates include coordinates of a pixel unit used for light emitting in the first light emitting module, and the second pixel coordinates include coordinates of a pixel unit used for light emitting in the second light emitting module.

For example, in a possible implementation, before coordinate transformation between the preset coordinate system and the pixel coordinate system of the second light emitting module is performed, delay control may be first performed to ensure that the two light emitting modules emit light simultaneously.

After obtaining the first pixel coordinates, the vehicle lamp controller may construct the high beam shielding dark area based on the first pixel coordinates. In other words, a pixel unit that is in the first light emitting module and that is projected onto the high beam shielding dark area is determined. Then, pixel units that are projected onto the high beam shielding dark area are controlled to be turned off, and a part or all of pixel units other than these pixel units in the first light emitting module are controlled to be turned on, so that illumination of the first light emitting module can cover the third area.

After obtaining the second pixel coordinates, the vehicle lamp controller may control, based on the second pixel coordinates, a corresponding pixel unit in the second light emitting module to be turned on, and control a pixel unit other than the corresponding pixel unit to be turned off. In this way, a pattern formed by the second light emitting module through light emitting includes the first area and the second area.

For example, in another possible implementation, the first pixel coordinates may include coordinates of a pixel unit for being turned off in the first light emitting module, and the second pixel coordinates may include coordinates of a pixel unit for being turned off in the second light emitting module. After learning of the pixel units that are turned off, the remaining pixel units may be controlled to be turned on. In this way, the foregoing effect of high beam control may also be implemented.

It may be understood that the high beam control procedure shown in FIG. 17 is merely an example, and does not constitute a limitation on embodiments of this application. In a specific implementation, another control procedure may alternatively be used to implement the foregoing effect of high beam control. This is not limited in embodiments of this application.

In another possible implementation, after the first light emitting module and the second light emitting module are activated, the vehicle lamp controller may further receive type information of the target object. Only if the type information indicates that the target object belongs to a preset high beam shielding object type, the vehicle lamp controller continues to perform subsequent high beam shielding operations such as tracking and prediction. If the type information indicates that the target object does not belong to the preset high beam shielding object type, the vehicle lamp controller does not perform the subsequent high beam shielding operations. For example, the preset high beam shielding object type may include various types of vehicles, a pedestrian, an animal, and the like. This is not limited in embodiments of this application.

An embodiment of this application further provides a vehicle. The vehicle may include the vehicle lamp system 100 in any one of the foregoing possible implementations.

It should be understood that sequence numbers of processes do not mean execution sequences in embodiments of this application. The execution sequences of the processes shall be determined based on functions and internal logic of the processes, and shall not be construed as any limitation on the implementation processes of embodiments of this application.

It should be further understood that the term "include" (also referred to as "includes", "including", "comprises", and/or "comprising"), when being used in this specification, specifies presence of the stated features, integers, steps, operations, elements, and/or components, with presence or addition of one or more other features, integers, steps, operations, elements, components, and/or their combinations not excluded.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A vehicle lamp system, wherein the vehicle lamp system comprises a vehicle lamp and a vehicle lamp controller;
the vehicle lamp comprises a first light emitting module and a second light emitting module, the first light emitting module and the second light emitting module are pixelated light emitting modules, and pixels of the first light emitting module are higher than pixels of the second light emitting module;
the vehicle lamp controller is configured to control the first light emitting module and the second light emitting module to emit light;
a pattern formed by the second light emitting module through light emitting comprises a first area and a second area, the first area is an area covered by illumination of the second light emitting module, and the second area is an area not covered by the illumination of the second light emitting module; and
the second area comprises a target object, an area between the target object in the second area and the vehicle lamp belongs to a third area, and illumination of the first light emitting module covers the third area.

2. The vehicle lamp system according to claim 1, wherein a maximum illumination range of the second light emitting module is greater than a maximum illumination range of the first light emitting module.

3. The vehicle lamp system according to claim 1 or 2, wherein that the vehicle lamp controller is configured to control the first light emitting module and the second light emitting module to emit light comprises:
the vehicle lamp controller is configured to: receive location information of the target object, and determine first pixel coordinates and second pixel coordinates based on the location information, wherein the first pixel coordinates comprise coordinates of a pixel unit used for light emitting in the first light emitting module, and the second pixel coordinates comprise coordinates of a pixel unit used for light emitting in the second light emitting module; and
the vehicle lamp controller is further configured to: control the first light emitting module to emit light based on the first pixel coordinates, and control the second light emitting module to emit light based on the second pixel coordinates.

4. The vehicle lamp system according to claim 3, wherein that the vehicle lamp controller is configured to: receive the location information of the target object, and determine the first pixel coordinates and the second pixel coordinates based on the location information comprises:
the vehicle lamp controller is configured to: receive the location information and type information of the target object, and determine the first pixel coordinates and the second pixel coordinates based on the location information when the type information indicates that the target object belongs to a preset high beam shielding object type.

5. The vehicle lamp system according to any one of claims 1 to 4, wherein the vehicle lamp controller comprises a first controller and a second controller, the first controller is configured to control the first light emitting module to emit light, and the second controller is configured to control the second light emitting module to emit light.

6. The vehicle lamp system according to any one of claims 1 to 5, wherein the first light emitting module is a light emitting module implemented based on digital light processing DLP, and the second light emitting module is a light emitting module implemented based on a plurality of light emitting diodes LEDs.

7. The vehicle lamp system according to any one of claims 1 to 6, wherein the vehicle lamp system further comprises a sensing apparatus, and the sensing apparatus is configured to sense a location and/or a type of the target object.

8. The vehicle lamp system according to any one of claims 1 to 7, wherein the third area further comprises areas on two sides of the target object in the second area.

9. A vehicle lamp, wherein the vehicle lamp comprises a first light emitting module and a second light emitting module;
the first light emitting module and the second light emitting module are pixelated light emitting modules, and pixels of the first light emitting module are higher than pixels of the second light emitting module;
the first light emitting module and the second light emitting module are configured to emit light to form patterns;
a pattern formed by the second light emitting module through light emitting comprises a first area and a second area, the first area is an area covered by illumination of the second light emitting module, and the second area is an area not covered by the illumination of the second light emitting module; and
the second area comprises a target object, a third area is comprised between the target object in the second area and the vehicle lamp, and illumination of the first light emitting module covers the third area.

10. The vehicle lamp according to claim 9, wherein an illumination range of the second light emitting module is greater than an illumination range of the first light emitting module.

11. A vehicle, wherein the vehicle comprises the vehicle lamp system according to any one of claims 1 to 8, or the vehicle comprises the vehicle lamp according to claim 9 or 10.
